# EUROPÄISCHE PATENTANMELDUNG

(11) **EP 0 989 390 A1**
(43) Veröffentlichungstag der Anmeldung: **29.03.2000**
(21) Anmeldenummer: 99250206.2
(22) Anmeldetag: 24.06.1999
(51) Int. Cl.: G01F 23/36

(54) **Elektrischer Füllstandsgeber für Kraftfahrzeugtanks**

(30) Priorität: 23.09.1998 DE 19843598
(71) Anmelder: Pierburg Aktiengesellschaft, 41460 Neuss (DE)
(72) Erfinder: Grötschel, Norbert, 41472 Neuss (DE); Hemmert, Klaus, 97618 Hollstadt (DE)

(57) **Zusammenfassung**

Bekannte Füllstandsgeber weisen koordinierte Schleiferbahnen auf, die dazu führen, dass die Funktion des Füllstandsgebers durch verfälschte Füllstandsanzeigen gestört ist und ggf. zu einer Abschaltung der Füllstandsanzeige Anlass gibt.

Hierfür weist der neue Füllstandsgeber die Merkmale auf, dass die mit der Widerstandsschicht (11) verbundene Schleiferbahn (9) aus einer Anzahl von mit den Abstandslücken (14) nebeneinanderliegender, die Schleiferzinken (13) bildender Leiterbahnen (15) gebildet ist, wobei die ausserhalb der Schleiferbahnen (9) liegenden Enden der Leiterbahnen (15) mit der einen Kammrücken (16) bildenden Widerstandsschicht (11) verbunden sind.

Hierdurch wird erreicht, dass eine ggf. vorliegende Korrosions- oder Sperrschicht bereits nach ein- oder zweimaligem Überfahren der Schleiferbahnen abgeschabt ist.

## Beschreibung

Die Erfindung betrifft einen elektrischen Füllstandsgeber für Kraftfahrzeugtanks nach dem Oberbegriff des Patentanspruchs 1.

Ein derartiger Füllstandsgeber ist in der US-PS 4,557,144 offenbart und zeigt dort einen Schwimmerhebel, der mit einem Kontaktblatt mit zwei Schleiferarmen auf eine Keramikplatte mit zwei Schleiferbahnen einwirkt, wobei die eine Schleiferbahn aus einem resistiven und die andere aus einem conduktiven Werkstoff bestehen.

Aus der DE 29 32 714 C2 ist ein Drehwiderstand bekannt, bei dem es sich als vorteilhaft erwiesen hat, die Schleiferbahn aus schmalen Leiterbahnen zu bilden, die quer zur Schleiferbahn mit gegenseitigem Abstand zueinander angeordnet und mit Widerstandsschichten verbunden sind, womit nicht lineare Kennlinien erzeugbar sind.

Diese Leiterbahnen und die aus resistiven oder conduktiven Werkstoffen gebildeten Schleiferbahnen bestehen beispielsweise aus einer Silberlegierung. Es hat sich nun gezeigt, dass diese Legierungen unter Einfluss einer aggressiven Atmosphäre oder Flüssigkeit, wie sie in einem Brennstofftank bestehen kann, zur Korrosion neigt, die zu einer Sperrschicht auf der Kontaktfläche der Leiterbahnen bzw. Schleiferbahnen und auch der Schleiferarmkontaktstellen führen kann.

Diese Sperrschicht führt dazu, dass die Funktion des Füllstandsgebers durch verfälschte Füllstandsanzeigen gestört ist und ggf. zu einer Abschaltung der Füllstandsanzeige Anlass gibt.

Als Abhilfe ist die Verwendung hochwertiger Werkstoffe bekannt, die jedoch den Füllstandsgeber erheblich verteuern.

Es ist daher Aufgabe der Erfindung, Massnahmen aufzuzeigen, mit denen eine Funktionsfähigkeit des Füllstandsgebers trotz Verwendung herkömmlicher, preiswerter Werkstoffe auch bei Kontakt mit aggressiver Atmosphäre oder Flüssigkeit aufrecht erhalten bleibt.

Diese Aufgabe ist durch die im Kennzeichen des Patentanspruchs 1 angegebenen Merkmale gelöst, vorteilhafte Weiterbildungen sind mit den Unteransprüchen angegeben.

Die Erfindung basiert auf der Feststellung, dass die Schleiferbahn, die aus aneinandergereihten Leiterbahnen gebildet ist, bei gebildeter Sperrschicht bereits nach ein- oder zweimaligem Überfahren der Schleiferbahn mit dem Schleiferarm funktionsfähig, d. h. kontaktfähig ist, wohingegen die nicht unterbrochenen Leiterbahnen ausgebildete Schleiferbahn dabei weiterhin gesperrt bleibt.

Es besteht offensichtlich ein Schabeeffekt zwischen den aneinandergereihten Leiterbahnen und dem Schleiferarm, der zu einer Abtragung der Sperr- oder Korrosionsschicht führt.

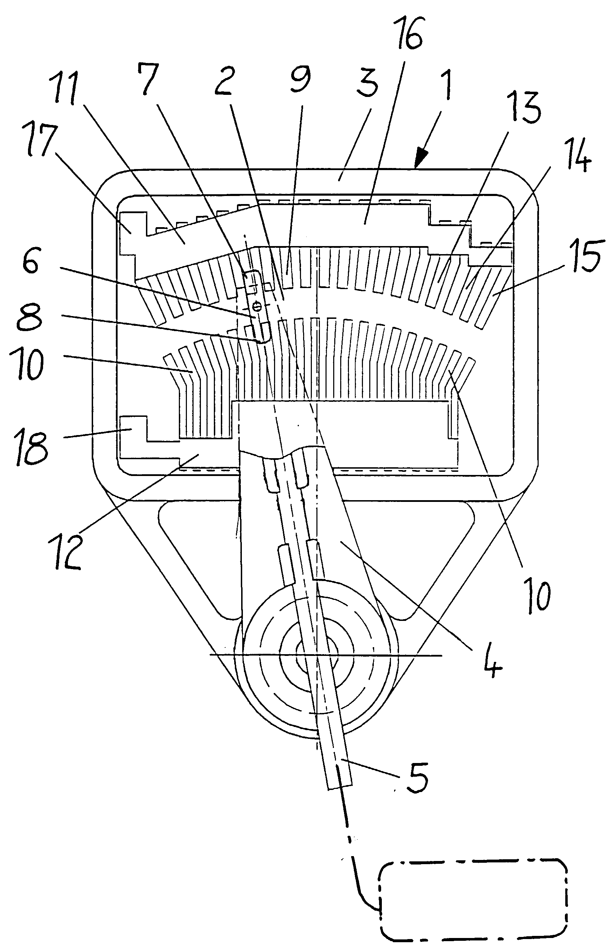

Ein Ausführungsbeispiel der Erfindung ist schematisch in der Zeichnung dargestellt und wird nachfolgend beschrieben.

Die Zeichnung zeigt einen elektrischen Füllstandsgeber 1 für Kraftfahrzeugtanks mit einer Trägerplatte 2, die aus einem Keramikwerkstoff bestehen kann, die an einer Halteplatte 3 befestigt ist, und der ein schwenkbarer Schleiferhebel 4 zugeordnet ist, der zum Beispiel an der Halteplatte 3 gelagert und von einem Schwimmerhebel 5 verstellt und mittels eines Brückenschleifers 6 mit zwei Kontaktarmen 7, 8 mit zwei Schleiferbahnen 9, 10 zusammenwirkt, von denen eine mit einer Widerstandsschicht 11 verbunden ist und die andere als Leiterbahn 12 ausgebildet ist.

Erfindungsgemäss ist nun vorgesehen, dass jede Schleiferbahn 9, 10 kammförmig ausgebildet ist, so dass quer zu den Schleiferbahnen 9, 10 zwischen Schleiferzinken 13 aus leitfähigem Werkstoff Abstandslücken 14 bestehen.

Durch diese Massnahmen wird erreicht, dass eine ggf. vorliegende Korrosions- oder Sperrschicht auf den Schleiferbahnen 9, 10 und/oder den Kontaktarmen 7, 8 des Brückenschleifers 6 bereits nach ein- oder zweimaligem Überfahren der Schleiferbahnen 9, 10 abgeschabt ist.

Es ist vorteilhaft, wenn die mit der Widerstandsschicht 11 verbundene Schleiferbahn 9 aus einer Anzahl von mit den Abstandslücken 14 nebeneinanderliegender, die Schleiferzinken 13 bildende Leiterbahnen 15 gebildet ist, wobei die ausserhalb der Schleiferbahn 9 liegenden Enden der Leiterbahnen 15 mit der einen Kammrücken 16 bildenden Widerstandsschicht 11 verbunden ist.

Über elektrische Anschlüsse 17, 18 kann eine Bezugsspannung/Abfallspannung an den Füllstandsgeber 1 angelegt bzw. abgegriffen werden.

## Patentansprüche

1. Elektrischer Füllstandsgeber für Kraftfahrzeugtanks mit einem Schleiferhebel, der von einem Schwimmerhebel verstellt und mittels eines Brückenschleifers mit zwei Kontaktarmen mit zwei Schleiferbahnen zusammenwirkt, von denen eine mit einer Widerstandsschicht verbunden ist und die andere als Leiterbahn ausgebildet ist, dadurch gekennzeichnet, dass jede Schleiferbahn (9, 10) kammförmig ausgebildet ist, so dass quer zu den Schleiferbahnen (9, 10) zwischen Schleiferzinken (13) aus leitfähigem Werkstoff Abstandslücken (14) bestehen.

2. Füllstandsgeber nach Anspruch 1, dadurch gekennzeichnet, dass die mit der Widerstandsschicht (11) verbundene Schleiferbahn (9) aus einer Anzahl von mit den Abstandslücken (14) nebeneinanderliegender, die Schleiferzinken (13) bildender Leiterbahnen (15) gebildet ist, wobei die ausserhalb der Schleiferbahnen (9) liegenden Enden der Leiterbahnen (15) mit der einen Kammrücken (16) bildenden Widerstandsschicht (11) verbunden sind.
